# EUROPÄISCHE PATENTSCHRIFT

(11) **EP 4 260 443 B1**
(45) Veröffentlichungstag und Bekanntmachung des Hinweises auf die Patenterteilung: **26.08.2026**
(21) Anmeldenummer: 21820496.4
(22) Anmeldetag: 25.11.2021
(51) Int. Cl.: H02K 5/10, B60K 1/00, H02K 5/04, H02K 7/00, H02K 7/116, H02K 11/33

(54) **SYSTEMGEHÄUSE EINES E-ACHSEN-MODULS MIT ELEKTRISCHER MASCHINE, LEISTUNGSELEKTRONIK, GETRIEBE**
SYSTEM HOUSING OF AN ELECTRIC AXLE MODULE WITH ELECTRIC MACHINE, POWER ELECTRONICS, GEAR
BOÎTIER DE SYSTÈME D'UN MODULE D'ESSIEU ÉLECTRIQUE AVEC MACHINE ÉLECTRIQUE, MODULE DE PUISSANCE ET BOÎTE DE VITESSE

(30) Priorität: 14.12.2020 DE 102020215835
(43) Veröffentlichungstag der Anmeldung: 18.10.2023
(73) Patentinhaber: Robert Bosch GmbH, 70442 Stuttgart (DE)
(72) Erfinder: ROEHNER, Marc Oliver, 69124 Heidelberg (DE); BREINLINGER, Philipp, 76137 Karlsruhe (DE); SCHENKER, Joachim, 70771 Leinfelden-Echterdingen (DE)
(86) Internationale Anmeldenummer: PCT/EP2021/082937
(87) Internationale Veröffentlichungsnummer: WO 2022/128384

(56) Entgegenhaltungen:
- US-A1- 2014 265 670
- US-A1- 2016 268 867

## Beschreibung

### Technisches Gebiet

Die Erfindung bezieht sich auf ein Systemgehäuse eines E-Achsen-Moduls mit einer elektrischen Maschine, einer Leistungselektronik und einem Getriebe. Darüber hinaus bezieht sich die Erfindung auf die Verwendung des Systemgehäuses in einem E-Achsen-Modul eines Antriebsstrangs eines elektrischen Fahrzeugs, Nutzfahrzeugs oder eines Hybridfahrzeugs.

### Stand der Technik

DE 20 011 138 U1 bezieht sich auf einen Elektromotor, dessen Gehäuse wenigstens ein Lagerschild mit einem Lager zur Lagerung einer Welle umfasst. Ferner ist eine mit dem Lagerschild verbundene oder als integraler Teil des Lagerschilds ausgebildete Abdeckbuchse vorgesehen, die eine Abschirmbuchse umgibt. Der Elektromotor ist insbesondere in eine Antriebsachse eines Fahrzeugs eingebaut. Sowohl ein Mantelteil des Achsgehäuses als auch das Lagerschild, welches eine quer zur Achse der Motorwelle verlaufende Zwischenwand des Achsgehäuses bildet und die mit dem Gehäusemittelteil unmittelbar verbunden ist, sind aus Stahl gefertigt. Die Abdeckbuchse kann als ein Bauteil mit dem Lagerschild ausgebildet sein.

DE 10 2012 202 460 A1 hat eine elektromotorische Getriebevorrichtung zum Gegenstand. Diese umfasst einen Elektromotor und ein Getriebe, wobei ein Motorgehäuseabschnitt und ein Getriebegehäuseabschnitt als ein gemeinsames Gehäuse einstückig ausgebildet sind. Es ist ein Lagerschild an einer Stirnseite eines Elektromotorgehäuses vorgesehen, welches dort angeschraubt ist. Durch die einstückige Ausführung wird die Montage der elektromotorischen Getriebevorrichtung erheblich vereinfacht. Ein Zwischenlagerschild ist beispielsweise mit dem Gehäuse, insbesondere mit einem Hülsenabschnitt des Gehäuses verschraubt.

Bei elektrischen Maschinen werden in der Regel an deren Gehäuse demontierbare Deckel angeschraubt, hinter welchen sich elektrische Verbindungen zwischen elektrischer Maschine und der der elektrischen Maschine zugeordneten Leistungselektronik befinden, so zum Beispiel eine Art Sehverschaltung, Temperatursensoren, Signalgebereinheit und dergleichen. Diese in der Regel als Deckel ausgebildete Abdeckung geht mit dem Nachteil einher, dass dieser Deckel mit einer Sicherung zu versehen ist, um sicherzustellen, dass nur Strom fließen kann, wenn der Deckel beziehungsweise die Abdeckung geschlossen ist. Diese Sicherung erzeugt erhebliche Zusatzkosten. Des Weiteren ist von Nachteil, dass jeder Deckel abzudichten ist, so dass sich ein Korrosionsrisiko ergibt, vor allem, wenn kupferhaltige Legierungen zum Einsatz kommen. Des Weiteren geht die Montage des Deckels beziehungsweise des Deckelteils mit Kosten in der Fertigung einher, bedingt durch das Verschrauben, d. h. die Montage des Deckels beziehungsweise der Abdeckung sowie die Vorbehandlung und Applikation eines zur Abdichtung eingesetzten Dichtmittels. Weiterhin ist hinsichtlich des Bauraumbedarfs zu konstatieren, dass eine Dichtfläche sowie ein gegebenenfalls erforderlicher Schraubflansch zusätzlichen Bauraumbedarf erzeugen, der in den zur Verfügung stehenden, bereits optimal ausgenutzten Bauräumen meist nicht vorhanden ist.

Elektrische Antriebe sind weiterhin aus der US 2014/0265 670 A1 und der US 2016/268 867 A1 bekannt.

### Darstellung der Erfindung

Erfindungsgemäß wird ein Systemgehäuse eines E-Achsen-Moduls vorgeschlagen, mit einer elektrischen Maschine, einer Leistungselektronik und einem Getriebe. Eine Abdeckung des Systemgehäuses ist durch einen in dieses eingebrachten Gehäuseeinsatz der elektrischen Maschine gebildet.

Dadurch kann in vorteilhafter Weise auf eine separat zu montierende und separat abzudichtende Abdeckung in Form eines Deckelteils verzichtet werden. Wird der Gehäuseeinsatz in dem Systemgehäuse des E-Achsen-Moduls verschweißt, entsteht unmittelbar eine Abdichtung ohne Einsatz von separaten Abdichtelementen.

Am Systemgehäuse kommt erfindungsgemäß ein Gehäuseeinsatz für die elektrische Maschine zur Anwendung, welcher eine Stirnseite aufweist, die eine seitliche Öffnung des Systemgehäuses verschließt. Nach Montage der die vormontierte Baugruppe aus Stator, Rotorwelle und Rotor enthaltenden elektrischen Maschine in dem Gehäuseeinsatz kann dieser in das Systemgehäuse eingebracht werden und bildet nach Ausrichtung die seitliche Begrenzung des Systemgehäuses.

Der Gehäuseeinsatz der elektrischen Maschine wird erfindungsgemäß seitlich in das Systemgehäuse durch dessen seitliche Öffnung eingeschoben.

Der Gehäuseeinsatz der elektrischen Maschine wird erfindungsgemäß mit seiner Stirnseite in der seitlichen Öffnung des Systemgehäuses verschweißt , so dass sich durch die Ausbildung dieser stoffschlüssigen Verbindung unmittelbar eine Abdichtung verwirklichen lässt, ohne dass weitere Abdichtelemente erforderlich werden.

In Weiterbildung des erfindungsgemäß vorgeschlagenen Systemgehäuses befindet sich an dem Gehäuseeinsatz der elektrischen Maschine und dem Systemgehäuse mindestens eine radiale Öffnung.

Beim erfindungsgemäß vorgeschlagenen Systemgehäuse kann durch die mindestens eine radiale Öffnung eine AC-Schnittstelle ausgebildet werden, durch welche sich elektrische Leiter der elektrischen Maschine zur Leistungselektronik erstrecken.

Die AC-Schnittstelle kann entweder als Steckkontakt oder auch als Schraubkontakt ausgeführt werden. Beide Varianten sind möglich und ermöglichen eine höhere Varianz in Bezug auf die Erfüllung von kundenseitigen Einbauanforderungen.

In Weiterbildung des erfindungsgemäß vorgeschlagenen Systemgehäuses kann eine Resolvereinheit in externer Anordnung in Bezug auf das Systemgehäuse angeordnet werden. Alternativ besteht die Möglichkeit, das erfindungsgemäß vorgeschlagene Systemgehäuse so auszuführen, dass die Resolvereinheit in interner Anordnung in Bezug auf das Systemgehäuse angeordnet werden kann.

Beim erfindungsgemäß vorgeschlagenen Systemgehäuse kann bei auf dem Systemgehäuse aufgenommener Leistungselektronik mindestens ein Steckkontakt zwischen der elektrischen Maschine und der Leistungselektronik verlaufen. Alternativ besteht die Möglichkeit, das erfindungsgemäß vorgeschlagene Systemgehäuse so auszuführen, dass bei in dieses integrierter Leistungselektronik mindestens ein Schraubkontakt zwischen der elektrischen Maschine einerseits und der Leistungselektronik andererseits verläuft.

Darüber hinaus bezieht sich die Erfindung auf die Verwendung des Systemgehäuses im Antriebsstrang eines elektrischen Fahrzeugs, eines Nutzfahrzeugs oder eines Hybridfahrzeugs.

### Vorteile der Erfindung

Durch die erfindungsgemäß vorgeschlagene Lösung kann in vorteilhafter Weise auf eine Sicherung der Abdeckung an einer Seite des Systemgehäuses verzichtet werden, da die Stirnseite des Gehäuseeinsatzes der elektrischen Maschine unmittelbar in der seitlichen Öffnung des Systemgehäuses stoffschlüssig gefügt wird. Daraus ergibt sich der Entfall einer Dichtung auf dieser Seite des Systemgehäuses. Hinsichtlich der Montage beziehungsweise der Fertigung des erfindungsgemäß vorgeschlagenen Systemgehäuses können durch den Wegfall des Deckels beziehungsweise der Abdeckung an der Seitenfläche des Systemgehäuses auch alle Montageumfänge für die Sicherung des Deckels beziehungsweise der Abdeckung entfallen. In besonders vorteilhafter Weise verringert sich der Bauraumbedarf, da durch den Wegfall des Flansches sowie der Schraubaugen der Abdeckung nicht unerheblich Bauraum eingespart werden kann.

Nicht zuletzt ergibt sich durch den Wegfall eines Bauteils und geschickte Nutzung der ohnehin vorhandenen Komponenten eine Gewichtsreduktion der gesamten Einbaueinheit E-Achsen-Modul, die im Antriebsstrang eines elektrisch angetriebenen Fahrzeugs zum Einsatz kommt.

Durch die erfindungsgemäß vorgeschlagene Lösung lässt sich eine erhebliche Herabsetzung des Korrosionsrisikos erreichen. Aufgrund der erfindungsgemäß vorgeschlagenen Lösung besteht die Möglichkeit, günstigere Materialien in Gestalt von Sekundärlegierungen einzusetzen, die an sich eine höhere Korrosionsneigung aufweisen als eine relativ teure Primärlegierung. Dies kann jedoch durch die erfindungsgemäß vorgeschlagene Lösung mehr als ausgeglichen werden, da die Korrosionsanfälligkeit durch die erfindungsgemäß vorgeschlagene Lösung erheblich herabgesetzt werden kann und somit günstigere Materialien eingesetzt werden können. Des Weiteren kann durch die erfindungsgemäß vorgeschlagene Lösung ein Baukastenprinzip verwirklicht werden. Dies bedeutet, dass für verschiedene Endabnehmer verschiedene Anordnungen der Komponenten Getriebe, Leistungselektronik und elektrische Maschine realisiert werden können, wobei zwischen den aufgezählten Komponenten des Baukastens standardisierte Schnittstellen verwirklicht werden.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Ansicht eines E-Achsen-Moduls,
- Figur 2: ein E-Achsen-Modul mit einer integrierten Abdeckung,
- Figur 3: ein E-Achsen-Modul in modularer Ausführung,
- Figur 4: einen Schnitt durch das E-Achsen-Modul,
- Figur 5: einen Schnitt durch eine Ausführungsvariante eines Gehäuseeinsatzes einer elektrischen Maschine,
- Figur 6: ein E-Achsen-Modul mit in ein Systemgehäuse integriertem Gehäuseeinsatz und
- Figur 7: einen Schnitt durch das E-Achsen-Modul mit in das Systemgehäuse integriertem Gehäuseeinsatz.

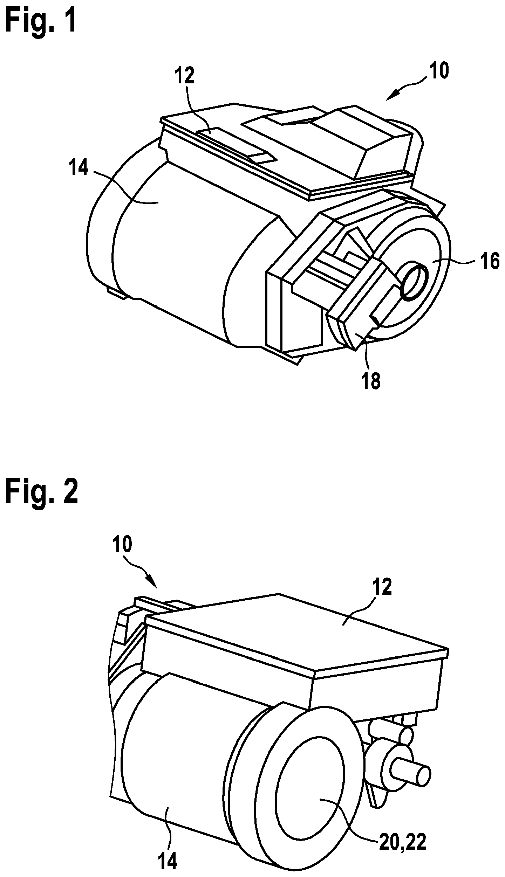

Figur 1 zeigt ein E-Achsen-Modul 10 in perspektivischer Draufsicht. Aus Figur 1 geht hervor, dass ein E-Achsen-Modul 10 eine Leistungselektronik 12 aufweist, die auf der Oberseite des E-Achsen-Moduls 10 befestigt ist. Darüber hinaus umfasst dieses eine elektrische Maschine 14, an der seitlich ein Getriebe 16 angeflanscht ist. Optional können auf der Seite des Getriebes 16 des E-Achsen-Moduls 10 eine Parksperre 18 sowie weitere Anbaukomponenten vorgesehen sein.

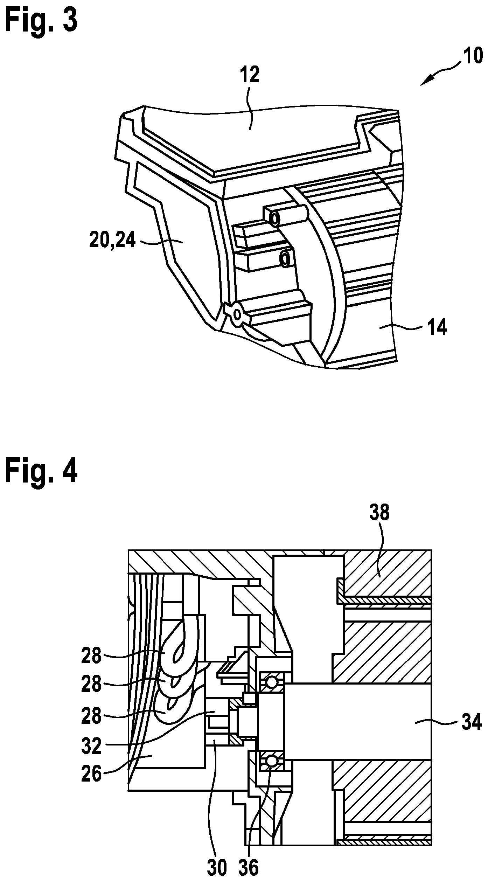

Den Figuren 2 und 3 ist zu entnehmen, dass das E-Achsen-Modul 10 in einer integrierten Ausführung 22 und einer modularen Ausführung 24 ausgebildet sein kann. Im Falle einer integrierten Ausführung 22 ist eine Abdeckung 20 seitlich am Gehäuse der elektrischen Maschine 14 angeordnet. In der Ausführungsvariante gemäß Figur 2 befindet sich die Leistungselektronik 12 auf der Oberseite des E-Achsen-Moduls 10. Im Gegensatz zur integrierten Ausführungsvariante 22 gemäß Figur 2 ist bei der modularen Ausführungsvariante 24 des E-Achsen-Moduls 10 die Abdeckung 20 nicht eben beschaffen, sondern als separates Aluminiumdruckgussbauteil. In der in Figur 3 dargestellten modularen Ausführung 24 befindet sich die Leistungselektronik 12 ebenfalls auf der Oberseite des E-Achsen-Moduls 10.

Der Darstellung gemäß Figur 4 ist ein Schnitt durch ein E-Achsen-Modul 10 zu entnehmen, wobei über eine freiliegende Öffnung 26 eine AC-Verschaltung 28 der elektrischen Maschine 14 zugänglich ist. Neben der AC-Verschaltung 28 wird auch eine Resolvereinheit 44 zur Verarbeitung von Resolversignalen eingesetzt. Des Weiteren kann über die freiliegende Öffnung 26 Zugang zu einem NTC-Sensor 32 erlangt werden. Ein Temperatursignal für einen NTC-Sensor 32 kommt über ein Kabel von einem Pin des Stators 38 der elektrischen Maschine 14 und wird an der Resolvereinheit 44 zu einem Kabelstrang mit dem Resolverkabel zusammengefasst und zum Inverter der Leistungselektronik 12 geführt.

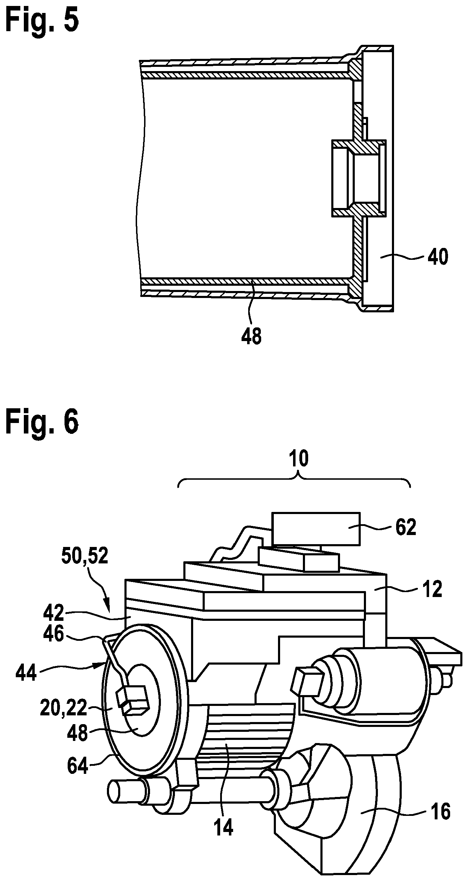

Darüber hinaus ist der Schnittdarstellung gemäß Figur 4 eine Rotorwelle 34 zu entnehmen, die in einem Lager 36 gelagert ist. Die Rotorwelle 34 ist von einem Stator 38 der elektrischen Maschine 14 umschlossen, der in einem Systemgehäuse 42 der elektrischen Maschine 14 aufgenommen ist. Figur 5 zeigt "verschenkten" Bauraum 40, der sich dann ergibt, wenn ein Gehäuseeinsatz 48 tiefliegend in einer Öffnung verbaut wird.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

Figur 6 ist ein E-Achsen-Modul 10 zu entnehmen. Dieses umfasst die Leistungselektronik 12, auf deren Oberseite sich kundenseitige Anschlüsse 62 befinden. Seitlich an einem Systemgehäuse 42 des E-Achsen-Moduls 10 ist ein Getriebe 16 angeflanscht; des Weiteren ist im Systemgehäuse 42 die elektrische Maschine 14 untergebracht. Wie aus der Darstellung gemäß Figur 6 hervorgeht, wird eine seitliche, freiliegende Öffnung 26 am Systemgehäuse 42 dadurch verschlossen, dass der Gehäuseeinsatz 48, in dem die Komponenten der elektrischen Maschine 14 aufgenommen sind, seitlich in das Systemgehäuse 42 eingeschoben wird. Im eingeschobenen Zustand des Gehäuseeinsatzes 48 in das Systemgehäuse 42 liegt erfindungsgemäss eine Stirnseite 65 des Gehäuseeinsatzes 48 plan in der seitlichen Öffnung 66 des Systemgehäuses 42 an. Nach Ausrichtung des Gehäuseeinsatzes 48 der elektrischen Maschine 14 relativ zum Systemgehäuse 42 wird erfindungsgemäss die Stirnseite 65 des Gehäuseeinsatzes 48 entlang ihres Umfangs durch Ausbildung einer stoffschlüssigen Verbindung entlang einer Fügenaht 64 mit dem Systemgehäuse 42 verbunden. Durch das Verschweissen der Stirnseite 65 mit dem Systemgehäuse 42 kann eine Abdichtung eingespart werden, da die Fügenaht 64 eine solche bereits bildet. Zusätzliche Dichtkomponenten wie Flüssigdichtmittel, Elastomerdichtungen und gegebenenfalls Kleinteile können entfallen. Des Weiteren besteht die Möglichkeit, die stoffschlüssig erzeugte Fügenaht 64 automatisiert herzustellen.

In der Darstellung gemäß Figur 6 befindet sich eine Resolvereinheit 44 an der Außenseite des Systemgehäuses 42. Dazu verläuft ein Resolverarm 46, an dessen Ende diese Resolvereinheit 44 aufgenommen ist, ausgehend vom Zentrum der Rotorwelle der elektrischen Maschine 14 über einen Resolverarm 46 zur Leistungselektronik 12. In der Darstellung gemäß Figur 6 ist die Resolvereinheit 44 in externer Anordnung 50 ausgeführt. Es besteht alternativ die Möglichkeit, die Resolvereinheit 44 auch innenliegend zu positionieren. Im Falle einer internen Anordnung 52 der Resolvereinheit 44 ist diese im Hohlraum der elektrischen Maschine 14 aufgenommen. Bei dieser Ausführungsvariante entfiele der Resolverarm 46, der sich in der Darstellung gemäß Figur 6 an der Außenseite des Systemgehäuses 42 von der Stirnseite 65 zur Leistungselektronik 12 erstreckt.

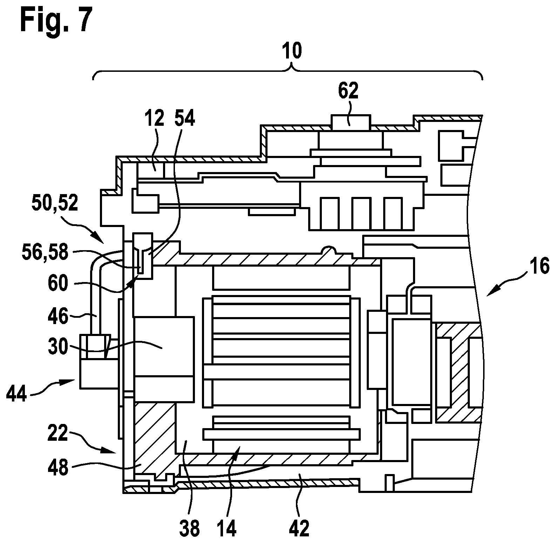

Figur 7 zeigt einen Schnitt durch das E-Achsen-Modul wie es in perspektivischer Darstellung in Figur 6 gezeigt ist.

Das E-Achsen-Modul 10 ist in der Darstellung gemäß Figur 7 geschnitten dargestellt. Aus der Darstellung gemäß Figur 7 geht hervor, dass der Gehäuseeinsatz 48, in dem die Komponenten der elektrischen Maschine 14 aufgenommen sind, seitlich in das Systemgehäuse 42 eingeschoben ist. Die Stirnseite 65 des Gehäuseeinsatzes 48 verläuft plan und bildet eine geschlossene Fläche, so dass die seitliche Öffnung 66, die einen seitlichen Zugang zum Systemgehäuse 42 bietet, verschlossen wird.

Wie aus der Darstellung gemäß Figur 7 hervorgeht, weisen sowohl das Systemgehäuse 42 als auch der Gehäuseeinsatz 48 zur Aufnahme der Komponenten der elektrischen Maschine 14 eine radiale Öffnung 54 auf. Durch die radiale Öffnung 54 werden einerseits der Gehäuseeinsatz 48 der elektrischen Maschine 14 und andererseits das Systemgehäuse 42 zueinander ausgerichtet. Durch die radiale Öffnung 54, die in beiden Komponenten, d. h. im Systemgehäuse 42 und im Gehäuseeinsatz 48, vorgesehen ist, entsteht eine Verbindung 56 zwischen der elektrischen Maschine 14 und der Leistungselektronik 12, die in diesem Falle an der Oberseite des E-Achsen-Moduls 10 aufgenommen ist.

In der Darstellung gemäß Figur 7 ist die Verbindung 56 durch einen Steckkontakt 58 dargestellt. Durch diesen erstrecken sich die Leiterkontakte beispielsweise der Statorwicklung der elektrischen Maschine 14 durch die radiale Öffnung 54 des Gehäuseeinsatzes 48 und des Systemgehäuses 42 in Richtung der Leistungselektronik 12, die in der Ausführungsvariante gemäß Figur 7 auf der Oberseite des E-Achsen-Moduls 10 aufgenommen ist.

Für den Fall, dass die Leistungselektronik 12 in das Systemgehäuse 42 integriert ist, kann anstelle des Steckkontaktes 58, wie er in Figur 7 dargestellt ist, ein Schraubkontakt 60 verwirklicht werden. Aus der Schnittdarstellung gemäß Figur 7 geht des Weiteren hervor, dass in diesem Fall die Resolvereinheit 44 in externer Anordnung 50 an der Außenseite des Systemgehäuses 42 verläuft. Von der Mitte der Stirnseite 65 des Gehäuseeinsatzes 48 erstreckt sich der Resolverarm 46 (vgl. Darstellung gemäß Figur 6) bis an die Oberseite der Leistungselektronik 12. Alternativ zu der in den Figuren 6 und 7 dargestellten externen Anordnung 50 der Resolvereinheit 44 kann diese auch in das Systemgehäuse 42 integriert werden. In diesem Falle kann der Resolverarm 46 eingespart werden; eine Verbindung zwischen der Resolvereinheit 44 und der in das Systemgehäuse 42 integrierbaren Leistungselektronik 12 verliefe in diesem Fall durch das Innere des Systemgehäuses 42 anstatt über den in der externen Anordnung 50 erforderlichen Resolverarm 46.

Auf der Oberseite der Leistungselektronik 12 befinden sich kundenseitige Anschlüsse 62, mit denen die Leistungselektronik 12 des E-Achsen-Moduls 10 mit einem Fahrzeugsteuergerät und weiteren Elektronikkomponenten des Fahrzeugs verbunden werden kann.

Anordnung und Anzahl der kundenseitigen Anschlüsse 62 sind individuell je nach Einbaulage und Bauraumerfordernissen auf Kundenseite anpassbar.

Mittels einer bevorzugt stoffschlüssig gefügten Fügenaht 64 wird die Stirnseite 65 des Gehäuseeinsatzes 48 in der seitlichen Öffnung 66 des Systemgehäuses 42 verschweißt. Dadurch wird unmittelbar durch die Fügenaht 64 eine Abdichtung erreicht. Weitere Dichtungskomponenten können entfallen. Des Weiteren wird aufgrund der stoffschlüssig erzeugten Fügenaht 64 eine Sicherung der seitlichen Öffnung 66, wie sie bei einer abnehmbaren Abdeckung erforderlich wäre, überflüssig. Aufgrund der Ausnutzung der Stirnseite 65 des Gehäuseeinsatzes 48 der elektrischen Maschine 14 als Abdeckung der seitlichen Öffnung 66 des Systemgehäuses 42 kann durch ohnehin vorhandene Komponenten ein Bauteil, nämlich die Abdeckung 20, wie sie in der integrierten Ausführung 22 gemäß Figur 2 beziehungsweise in der modularen Ausführung 24 gemäß Figur 3 erforderlich ist, komplett eingespart werden. Damit können zusätzliche Montageschritte, zusätzliche Fertigungserfordernisse, Toleranzen und Gewicht eingespart werden. Während in der Darstellung gemäß Figur 6 die Resolvereinheit 44 in ihrer externen Anordnung 50 dargestellt ist, zeigt Figur 7 eine Anordnungsmöglichkeit der Resolvereinheit in einer Resolverposition 30 im Innenraum der elektrischen Maschine 14, d. h. eine interne Anordnung 52.

Der Schutzbereich ist durch die Ansprüche definiert.

## Patentansprüche

1. Systemgehäuse (42) eines E-Achsen-Moduls (10), mit einer elektrischen Maschine (14), einer Leistungselektronik (12) und einem Getriebe (16), wobei eine Abdeckung (20) des Systemgehäuses (42) durch einen in dieses eingebrachten Gehäuseeinsatz (48) der elektrischen Maschine (14) gebildet ist, wobei der Gehäuseeinsatz (48) der elektrischen Maschine (14) eine Stirnseite (65) aufweist, die eine seitliche Öffnung (66) des Systemgehäuses (42) verschließt, wobei der Gehäuseeinsatz (48) der elektrischen Maschine (14) in das Systemgehäuse (42) in dessen seitliche Öffnung (66) eingeschoben ist, wobei der Gehäuseeinsatz (48) der elektrischen Maschine (14) mit seiner Stirnseite (65) in der seitlichen Öffnung (66) des Systemgehäuses (42) verschweißt ist, **dadurch gekennzeichnet, dass** die Stirnseite (65) des Gehäuseeinsatzes (4) im eingeschobenen Zustand plan in der seitlichen Öffnung (66) des Systemgehäuses (42) anliegt und entlang ihres Umfangs durch Ausbildung einer stoffschlüssigen Verbindung entlang einer Fügenaht (64) mit dem Systemgehäuse (42) verbunden ist.

2. Systemgehäuse (42) eines E-Achsen-Moduls (10), mit einer elektrischen Maschine (14), einer Leistungselektronik (12) und einem Getriebe (16) gemäß Anspruch 1, **dadurch gekennzeichnet, dass** an dem Gehäuseeinsatz (48) und dem Systemgehäuse (42) mindestens eine radiale Öffnung (54) vorgesehen ist.

3. Systemgehäuse (42) eines E-Achsen-Moduls (10), mit einer elektrischen Maschine (14), einer Leistungselektronik (12) und einem Getriebe (16) gemäß Anspruch 2, **dadurch gekennzeichnet, dass** durch die mindestens eine radiale Öffnung (54) eine Schnittstelle gebildet ist, durch die sich elektrische Leiter der elektrischen Maschine (14) zur Leistungselektronik (12) erstrecken.

4. Systemgehäuse (42) eines E-Achsen-Moduls (10), mit einer elektrischen Maschine (14), einer Leistungselektronik (12) und einem Getriebe (16) gemäß Anspruch 3, **dadurch gekennzeichnet, dass** die Schnittstelle als Steckkontakt (58) oder als Schraubkontakt (60) ausgeführt ist.

5. Systemgehäuse (42) eines E-Achsen-Moduls (10), mit einer elektrischen Maschine (14), einer Leistungselektronik (12) und einem Getriebe (16) gemäß den Ansprüchen 1 bis 4, **dadurch gekennzeichnet, dass** eine Resolvereinheit (44) in externer Anordnung (50) in Bezug auf das Systemgehäuse (42) angeordnet ist.

6. Systemgehäuse (42) eines E-Achsen-Moduls (10), mit einer elektrischen Maschine (14), einer Leistungselektronik (12) und einem Getriebe (16) gemäß den Ansprüchen 1 bis 4, **dadurch gekennzeichnet, dass** eine Resolvereinheit (44) in interner Anordnung (52) in Bezug auf das Systemgehäuse (42) angeordnet ist.

7. Systemgehäuse (42) eines E-Achsen-Moduls (10), mit einer elektrischen Maschine (14), einer Leistungselektronik (12) und einem Getriebe (16) gemäß den Ansprüchen 1 bis 6, **dadurch gekennzeichnet, dass** bei in das Systemgehäuse (42) integrierter Leistungselektronik (12) mindestens ein Steckkontakt (58) zwischen der elektrischen Maschine (14) und der Leistungselektronik (12) vorgesehen ist.

8. Systemgehäuse (42) eines E-Achsen-Moduls (10), mit einer elektrischen Maschine (14), einer Leistungselektronik (12) und einem Getriebe (16) gemäß den Ansprüchen 1 bis 6, **dadurch gekennzeichnet, dass** bei in das Systemgehäuse (42) integrierter Leistungselektronik (12) mindestens ein Schraubkontakt (60) zwischen der elektrischen Maschine (14) und der Leistungselektronik (12) vorgesehen ist.

9. Verwendung des Systemgehäuse (42) eines E-Achsen-Moduls (10), mit einer elektrischen Maschine (14), einer Leistungselektronik (12) und einem Getriebe (16) gemäß einem der Ansprüche 1 bis 8 in einem E-Achsen-Modul (10) eines Antriebsstrangs eines elektrischen Fahrzeugs, eines Nutzfahrzeugs oder eines Hybridfahrzeugs.

## Claims

1. System housing (42) of an electric axle module (10), having an electric machine (14), power electronics (12) and a transmission (16), wherein a cover (20) of the system housing (42) is formed by a housing insert (48), introduced into the latter, of the electric machine (14), wherein the housing insert (48) of the electric machine (14) has an end face (65) which closes a lateral opening (66) in the system housing (42), wherein the housing insert (48) of the electric machine (14) is pushed into the system housing (42) in the lateral opening (66) therein, wherein the housing insert (48) of the electric machine (14) is welded by its end face (65) in the lateral opening (66) in the system housing (42), **characterized in that**, in the pushed-in state, the end face (65) of the housing insert (4) lies flat in the lateral opening (66) in the system housing (42) and is connected along its circumference to the system housing (42) by an integrally bonded connection being formed along a joint seam (64).

2. System housing (42) of an electric axle module (10), having an electric machine (14), power electronics (12) and a transmission (16) according to Claim 1, **characterized in that** at least one radial opening (54) is provided on the housing insert (48) and the system housing (42).

3. System housing (42) of an electric axle module (10), having an electric machine (14), power electronics (12) and a transmission (16) according to Claim 2, **characterized in that** the at least one radial opening (54) forms an interface, through which electrical conductors of the electric machine (14) extend to the power electronics (12).

4. System housing (42) of an electric axle module (10), having an electric machine (14), power electronics (12) and a transmission (16) according to Claim 3, **characterized in that** the interface is designed as a plug contact (58) or as a screw contact (60).

5. System housing (42) of an electric axle module (10), having an electric machine (14), power electronics (12) and a transmission (16) according to Claims 1 to 4, **characterized in that** a resolver unit (44) is arranged in an external arrangement (50) with respect to the system housing (42).

6. System housing (42) of an electric axle module (10), having an electric machine (14), power electronics (12) and a transmission (16) according to Claims 1 to 4, **characterized in that** a resolver unit (44) is arranged in an internal arrangement (52) with respect to the system housing (42).

7. System housing (42) of an electric axle module (10), having an electric machine (14), power electronics (12) and a transmission (16) according to Claims 1 to 6, **characterized in that**, when the power electronics (12) are integrated in the system housing (42), at least one plug contact (58) is provided between the electric machine (14) and the power electronics (12).

8. System housing (42) of an electric axle module (10), having an electric machine (14), power electronics (12) and a transmission (16) according to Claims 1 to 6, **characterized in that**, when the power electronics (12) are integrated in the system housing (42), at least one screw contact (60) is provided between the electric machine (14) and the power electronics (12).

9. Use of the system housing (42) of an electric axle module (10), having an electric machine (14), power electronics (12) and a transmission (16) according to any one of Claims 1 to 8 in an electric axle module (10) of a drive train of an electric vehicle, a utility vehicle or a hybrid vehicle.

## Revendications

1. Boîtier de système (42) d'un module d'essieu électrique (10), avec une machine électrique (14), une électronique de puissance (12) et une transmission (16), un couvercle (20) du boîtier de système (42) étant formé par un insert de boîtier (48) introduit dans celui-ci de la machine électrique (14), l'insert de boîtier (48) de la machine électrique (14) comportant une face frontale (65), qui ferme une ouverture latérale (66) du boîtier de système (42), l'insert de boîtier (48) de la machine électrique (14) étant enfilé dans le boîtier de système (42) dans l'ouverture latérale (66) de celui-ci, l'insert de boîtier (48) de la machine électrique (14) étant soudé par sa face frontale (65) dans l'ouverture latérale (66) du boîtier de système (42), **caractérisé en ce que** la face frontale (65) de l'insert de boîtier (4) repose, dans l'état enfilé, à plat dans l'ouverture latérale (66) du boîtier de système (42) et est reliée au boîtier de système (42) le long de sa périphérie en formant une liaison par liaison de matière le long d'un joint d'assemblage (64).

2. Boîtier de système (42) d'un module d'essieu électrique (10) avec une machine électrique (14), une électronique de puissance (12) et une transmission (16) selon la revendication 1, **caractérisé en ce qu'**au moins une ouverture radiale (54) est prévue sur l'insert de boîtier (48) et le boîtier de système (42).

3. Boîtier de système (42) d'un module d'essieu électrique (10) avec une machine électrique (14), une électronique de puissance (12) et une transmission (16) selon la revendication 2, **caractérisé en ce qu'**est formée par l'au moins une ouverture radiale (54) une interface, à travers laquelle des conducteurs électriques de la machine électrique (14) s'étendent jusqu'à l'électronique de puissance (12).

4. Boîtier de système (42) d'un module d'essieu électrique (10) avec une machine électrique (14), une électronique de puissance (12) et une transmission (16) selon la revendication 3, **caractérisé en ce que** l'interface est réalisée sous la forme d'un contact enfichable (58) ou d'un contact vissé (60).

5. Boîtier de système (42) d'un module d'essieu électrique (10) avec une machine électrique (14), une électronique de puissance (12) et une transmission (16) selon les revendications 1 à 4, **caractérisé en ce qu'**une unité de résolution (44) est disposée dans un ensemble extérieur (50) par rapport au boîtier de système (42).

6. Boîtier de système (42) d'un module d'essieu électrique (10) avec une machine électrique (14), une électronique de puissance (12) et une transmission (16) selon les revendications 1 à 4, **caractérisé en ce qu'**une unité de résolution (44) est disposée dans un ensemble intérieur (52) par rapport au boîtier de système (42).

7. Boîtier de système (42) d'un module d'essieu électrique (10) avec une machine électrique (14), une électronique de puissance (12) et une transmission (16) selon les revendications 1 à 6, **caractérisé en ce que**, lorsque l'électronique de puissance (12) est intégrée dans le boîtier de système (42), au moins un contact enfichable (58) est prévu entre la machine électrique (14) et l'électronique de puissance (12).

8. Boîtier de système (42) d'un module d'essieu électrique (10) avec une machine électrique (14), une électronique de puissance (12) et une transmission (16) selon les revendications 1 à 6, **caractérisé en ce que**, lorsque l'électronique de puissance (12) est intégrée dans le boîtier de système (42), au moins un contact vissé (60) est prévu entre la machine électrique (14) et l'électronique de puissance (12).

9. Utilisation du boîtier de système (42) d'un module d'essieu électrique (10) avec une machine électrique (14), une électronique de puissance (12) et une transmission (16) selon l'une des revendications 1 à 8, dans un module d'essieu électrique (10) d'une chaîne cinématique d'un véhicule électrique, d'un véhicule utilitaire ou d'un véhicule hybride.
